# EUROPEAN PATENT APPLICATION

(11) **EP 4 697 653 A1**
(43) Date of publication of application: **18.02.2026**
(21) Application number: 25195653.8
(22) Date of filing: 13.08.2025
(51) Int. Cl.: H04L 9/40, H04L 67/10

(54) **DECENTRALIZED HYBRID CLOUD SYSTEM**

(30) Priority: 13.08.2024 IT 202400018961
(71) Applicant: FXT Digital S.r.l., 15057 Tortona (AL) (IT)
(72) Inventor: BRICARELLO, Marco, 16129 GENOVA (IT); CICALINI, Giancarlo, 15047 ALLUVIONI PIOVERA AL (IT)
(74) Representative: Modiano, Micaela Nadia

(57) **Abstract**

A decentralized hybrid cloud system (30) comprising at least one service provider space (22), owned and controlled by a service provider, and a plurality of user spaces (32), each one owned and controlled directly and exclusively by a respective human user. The service provider space (22) comprises at least one public server device (16) which is configured to manage and provide respective data (18) and services (19), and is capable of coordinating and placing the user spaces (32) in communication with each other. Each user space (32) comprises at least one respective client device (20) which is configured to manage and run applications (21), and at least one user space (32) further comprises at least one personal server device (36) which is configured to manage and provide respective data (38) and services (39), and is capable of providing these data (38) and services (39) to other user spaces (32) as well. The client device (20) of the user space (32) is functionally connected to the public server device (16) of the service provider space (22) and/or to the personal server device (36) of the user space (32). The personal server device (36) of the user space (32) is functionally connected to the public server device (16) of the service provider space (22), and also to the personal server devices (36) and to the client devices (20) of the other user spaces (32). Each data item (45, 48, 55, 58) generated by the client device (20) or by the personal server device (36) of the user space (32) is owned and controlled directly and exclusively by the human user. Moreover, the data item (45, 48, 55, 58) is stored, managed, and protected in the public server device (16) of the service provider space (22) and/or in the personal server device (36) and/or in the client device (20) of the user space (32), as a function of specific information associated with the data item (45, 48, 55, 58) by the human user who owns and controls it. Moreover, the data item (45, 48, 55, 58) generated by the client device (20) or by the personal server device (36) of the user space (32) can be distributed, managed and protected in the personal server devices (36) and/or in the client devices (20) of the other user spaces (32), as a function of specific information associated with the data item (45, 48, 55, 58) by the human user who owns and controls it. The specific information associated with the data item (45, 48, 55, 58) comprises a security profile that configures the behavior of the system (30) with respect to the data item (45, 48, 55, 58), and which is used by all the services (19, 39), including those provided by way of artificial intelligence, to manage, use, process and protect the data item (45, 48, 55, 58) as a function of its criticality, thus ensuring a high level of protection of the sensitive data of the human user.

## Description

The present invention relates to the technical field of computer networking and relates to a decentralized hybrid cloud system. The decentralized hybrid cloud system according to the present invention is particularly, but not exclusively, oriented to private users, professional users, small and medium enterprises, and government bodies.

Nowadays, cloud systems and the tools they offer are an essential part of daily life, both professional (or work-related) and personal. The ability to store, access and share data remotely, using cloud systems, has made the digital experience more fluid and more accessible. In one's professional life, cloud systems support remote collaboration between colleagues, enabling distributed groups to work in synchrony and efficiently. In one's personal life, cloud systems make it possible to store files, for example photographs, videos and/or documents, and access these files wherever one happens to be.

Notwithstanding the major advantages offered by cloud systems, they also bring significant risks, in particular regarding data security. In fact, transferring and storing data on cloud systems, and therefore on remote servers, increases the risk of unauthorized accesses, privacy violations, and loss of control over sensitive data. Furthermore, the use of cloud systems entails great dependence on service providers, as well as potential problems with those providers, for example service interruptions or changes in policy, which can have a significant impact on operations.

Data security is without doubt the most critical problem for users of cloud systems. To seek to mitigate this problem, specific models of known cloud systems have been developed: starting from the public cloud system model, we passed to the private cloud system model, and we are now at the hybrid cloud system model.

In a known public cloud system 10, the resources, in particular the servers, data and services, are accessible to a broad public over a telematic communication network, typically the internet. The resources are shared by a plurality of users and organizations, for example companies, and are owned by, and controlled by, the service provider. Basically, control of data and services is completely in the hands of the service provider.

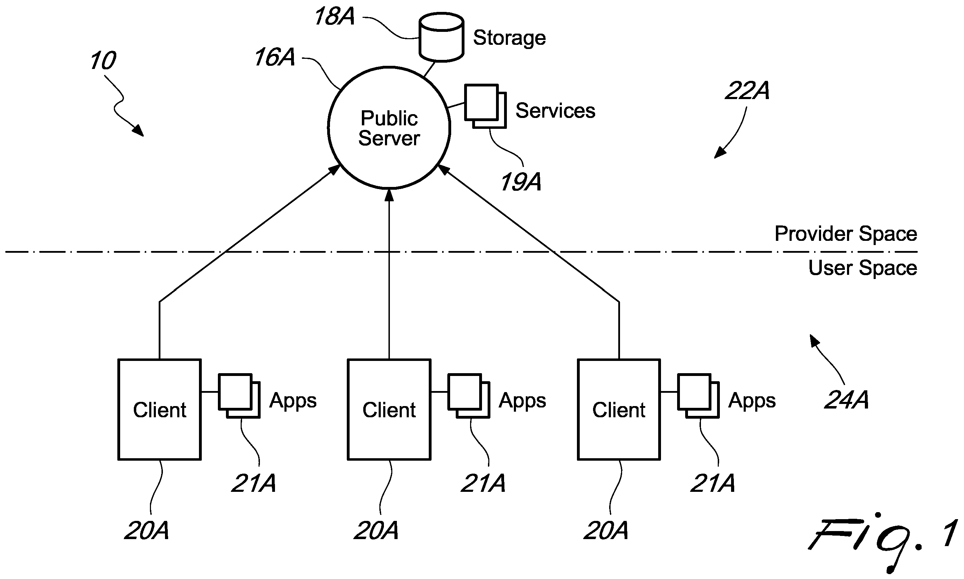

With reference to Figure 1, a public cloud system 10 comprises a service provider space 22A, owned and controlled by the service provider, and therefore by a third party, and a user space 24A, owned and controlled by users, who as noted can be individual human users or organizations, for example companies.

The service provider space 22A comprises at least one public server device 16A, which manages and provides the respective data 18A and services 19A. In particular, the public server 16A comprises, or is operatively connected to, a data storage 18A which is configured to store the data of that public server 16A.

The user space 24A comprises a plurality of client devices 20A, each one of which manages the respective applications 21A. The clients 20A, and therefore the respective applications 21A, of the user space 24A are connected and functionally linked to, and therefore may access, the public server 16A, and therefore the respective data 18A and services 19A, of the service provider space 22A.

However, the public cloud system model 10 is not devoid of drawbacks. In fact, in this type of cloud system, the risk of privacy violations increases, since the data are managed and controlled by the service provider, and therefore by a third party. Furthermore, sharing the resources can allow unauthorized accesses both by ill-intentioned individuals and by other users of the public cloud system.

In a known private cloud system 12, access to the resources, in particular the servers, data and services, is limited to a single organization, for example a company. With respect to the public cloud system 10, the private cloud system 12 offers greater control over data security and over resource management, but it does not allow access to data and services outside the organization. Security of data and of the use of services is 100% assured in a private cloud system, except in the event of incorrect use by its users. This type of cloud system is used only by large-sized organizations, for example big companies, because it requires significant economic investments in infrastructure, development and management.

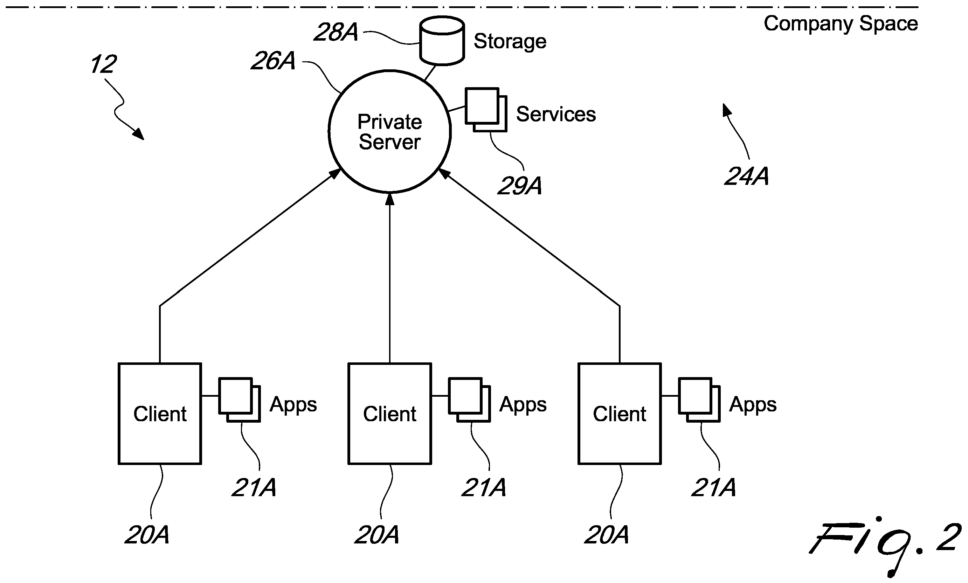

With reference to Figure 2, a private cloud system 12 comprises only an organization space 24A, which is owned and controlled by that organization, for example a company. Basically, the private cloud system 12 has no connection with a public server 16A and therefore does not comprise a service provider space 22A.

The organization space 24A comprises at least one private server device 26A, which manages and provides the respective data 28A and services 29A, and a plurality of client devices 20A, each one of which manages the respective applications 21A. In particular, the private server 26A comprises, or is operatively connected to, a data storage 28A which is configured to store the data of that private server 26A. The clients 20A, and therefore the respective applications 21A, of the organization space 24A are connected and functionally linked to, and therefore may access, the private server 26A, and therefore the respective data 28A and services 29A, of that organization space 24A.

A known hybrid cloud system 14 is half-way between the public cloud system 10 and the private cloud system 12 described above. The hybrid cloud system 14 combines resources owned and controlled by an organization, for example a company, with resources owned and controlled by a service provider, and therefore by a third party. This type of cloud system allows greater control over the security of sensitive data, which are kept within the organization, and takes advantage of the benefits of the resources offered by the service provider to conduct operations and/or functions that are non-critical. Security of data and secure use of services is possible in the hybrid cloud if sensitive data and critical services are managed only on private servers, and if there are mechanisms present that ensure that the sensitive data can never be transmitted, even in error, to public servers.

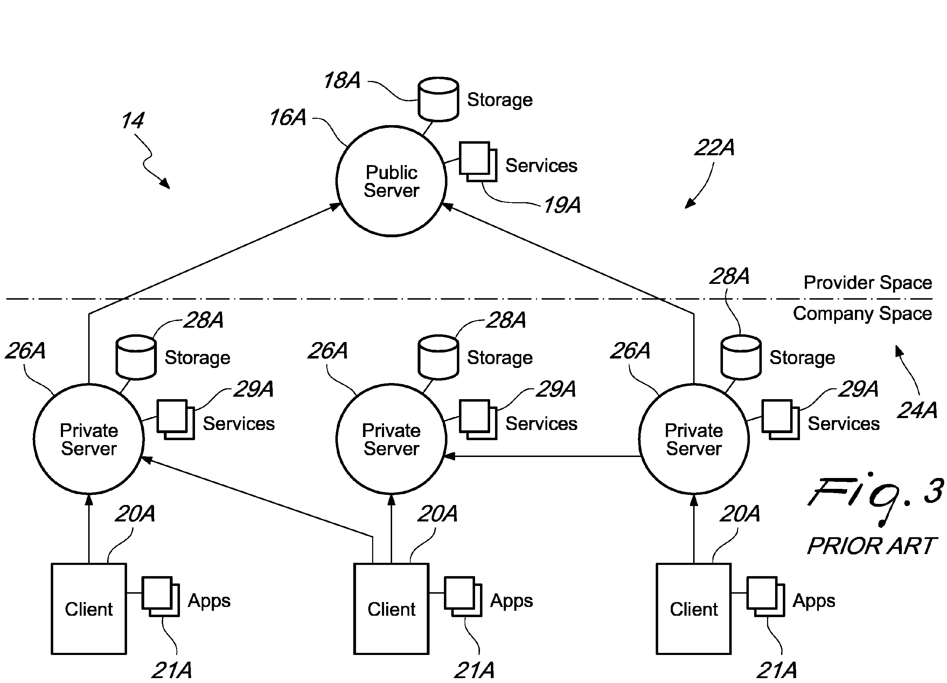

With reference to Figure 3, a hybrid cloud system 14 comprises a service provider space 22A, owned and controlled by that service provider, and therefore by a third party, and an organization space 24A, owned and controlled by that organization, for example a company.

The service provider space 22A comprises at least one public server device 16A, which manages and provides the respective data 18A and services 19A (both non-critical). In particular, the public server 16A comprises, or is operatively connected to, a data storage 18A which is configured to store the (non-critical) data of that public server 16A.

The organization space 24A comprises a plurality of private server devices 26A, each one of which manages and provides the respective data 28A and services 29A (both sensitive), and a plurality of client devices 20A, each one of which manages the respective applications 21A. In particular, each private server 26A comprises, or is operatively connected to, a data storage 28A which is configured to store the (sensitive) data of that private server 26A.

The private servers 26A, and therefore the respective data 28A and services 29A, of the organization space 24A are connected and functionally linked to, and therefore may access, the public server 16A, and therefore the respective data 18A and services 19A, of the service provider space 22A. The private servers 26A, and therefore the respective data 28A and services 29A, of the organization space 24A can be connected and functionally linked to, and therefore may access, other private servers 26A, and therefore the respective data 28A and services 29A, of the same organization space 24A. The clients 20A, and therefore the respective applications 21A, of the organization space 24A are connected and functionally linked to, and therefore may access, the plurality of private servers 26A, and therefore the respective data 28A and services 29A, of the same organization space 24A.

The hybrid cloud system model 14 is certainly the best of the known solutions. In fact, this type of cloud system has several advantages, including:
- greater control over security, offering the option to keep sensitive data and critical services within a space that is on-premises (private) and therefore under the direct control of the organization;
- flexibility and adaptability, allowing the use of resources on-premises (private) and on-cloud (public) to be balanced, based on the specific requirements of the organization;
- scalability, allowing ICT resources, in particular hardware, to be expanded or reduced dynamically on the basis of fluctuations in workload; and
- sustainability, allowing the use of resources to be optimized, so contributing to a more sustainable management of electricity.

However, the hybrid cloud system model 14 is not devoid of drawbacks. In fact, the costs associated with this type of cloud system are very high and therefore represent an economic investment that only large-sized organizations, for example big companies and/or government bodies, can sustain. In other words, the costs associated with the hybrid cloud system model 14 represent a form of barrier for private users, professional users, and small and medium organizations. Furthermore, a hybrid cloud system 14 must necessarily be designed on the basis of the needs of the organization, and the choice of which data and services to manage on-cloud (public) and which on-premises (private) is very complex and depends on the security requirements and on the applications used.

Therefore, currently, private users, professional users, and small and medium organizations cannot choose the private and hybrid models of cloud systems for economic reasons, and are practically compelled to choose the public cloud system model, of necessity accepting the risks associated with this type of cloud system, so placing their sensitive data at risk.

Furthermore, the design of a hybrid cloud system 14 must necessarily be entrusted to third-party companies that are expert in the sector, who must necessarily be given a great deal of information about the type and use of the data handled by the system. This represents a form of barrier to use of the hybrid cloud model 14 even for government bodies that handle sensitive data, and which therefore must as far as possible limit the diffusion of information about the data handled and ensure the protection of these data in any situation. Government bodies that work with sensitive data are practically forced to use the private cloud system model because, in the prior art, it is the only model that ensures the protection of sensitive data without requiring detailed information about the data handled to be given to third-party companies that develop and manage the functions that maintain the sensitive data in the private area of the hybrid cloud.

The aim of the present invention is to overcome the limitations of the known art described above, by devising a decentralized hybrid cloud system that makes it possible to obtain better effects than those that can be obtained with known solutions and/or similar effects at lower cost and with higher performance levels.

Within this aim, an object of the present invention is to conceive of a decentralized hybrid cloud system that makes it possible to ensure high standards of ICT security, in particular with regard to the protection of sensitive data and/or of critical services.

Another object of the present invention is to devise a decentralized hybrid cloud system that makes it possible to offer all the advantages listed above of the known hybrid cloud system, in particular great control of security, scalability, sustainability and adaptability.

Another object of the present invention is to conceive of a decentralized hybrid cloud system that makes it possible to contain the costs associated with it, thus making it economically sustainable and economically accessible to private users, professional users, and small and medium enterprises.

Another object of the present invention is to devise a decentralized hybrid cloud system that makes it possible to protect sensitive data and ensure such data is not exposed to public servers by means of strategies that do not require the intervention of third-party companies that are expert in the sector for the installation and management of the system, so allowing the decentralized hybrid cloud system to be used also by government bodies that handle sensitive data and which therefore must limit the diffusion of such sensitive data as far as possible.

Another object of the present invention is to devise a decentralized hybrid cloud system that makes it possible to offer and provide a digital experience that is customized to each user, including via the use of artificial intelligence functions that are closely correlated to the data item and which can assist the user in all his or her daily activities, in particular activities that use sensitive data, and in the protection of his or her data.

Another object of the present invention is to provide a decentralized hybrid cloud system that is highly reliable, relatively simple to manage, and economically competitive when compared to the known art.

This aim and these and other objects which will become more apparent hereinafter are achieved by a decentralized hybrid cloud system according to claim 1.

Further characteristics and advantages of the present invention will become more apparent from the detailed description of a preferred, but not exclusive, embodiment of the decentralized hybrid cloud system according to the invention, illustrated by way of non-limiting example with the aid of the accompanying drawings wherein:
Figure 1 is a block diagram that schematically illustrates the architecture of an embodiment of a first cloud system of known type, specifically a public cloud system;
Figure 2 is a block diagram that schematically illustrates the architecture of an embodiment of a second cloud system of known type, specifically a private cloud system;
Figure 3 is a block diagram that schematically illustrates the architecture of an embodiment of a third cloud system of known type, specifically a hybrid cloud system;
Figure 4 is a block diagram that schematically illustrates the architecture of an embodiment of a decentralized hybrid cloud system according to the present invention;
Figure 5 is a block diagram that schematically illustrates a data item management strategy implemented in an embodiment of a decentralized hybrid cloud system according to the present invention;
Figure 6 is a block diagram that schematically illustrates a sharing of a sensitive data item according to a data item management strategy implemented in an embodiment of a decentralized hybrid cloud system according to the present invention;
Figures 7A and 7B are two block diagrams that schematically illustrate the hardware/software stack of an embodiment of an element of the decentralized hybrid cloud system according to the present invention, and the hardware/software stack of an embodiment of an element of a hybrid cloud system of known type, based on virtual machines, respectively;

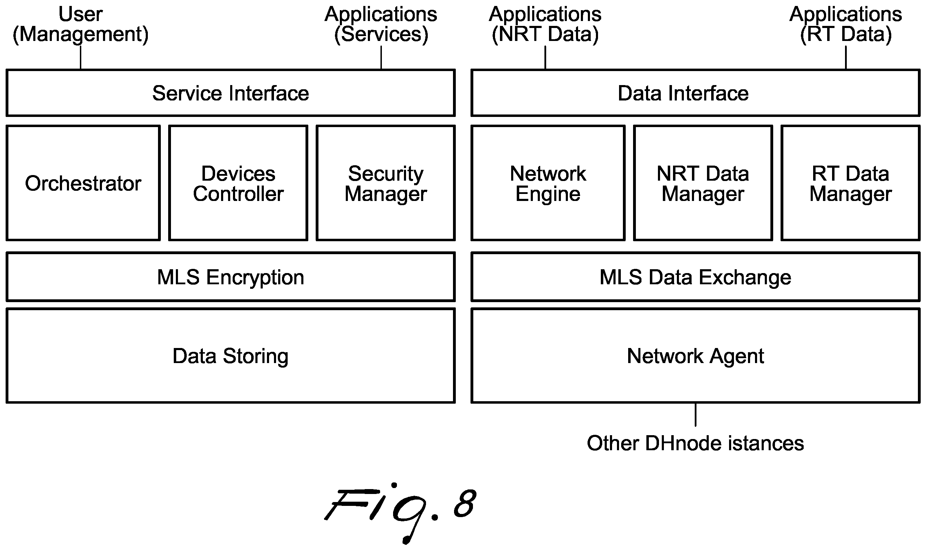

Figure 8 is a block diagram that schematically illustrates the architecture of an instance of a DHnode control application in an embodiment of a decentralized hybrid cloud system according to the present invention.

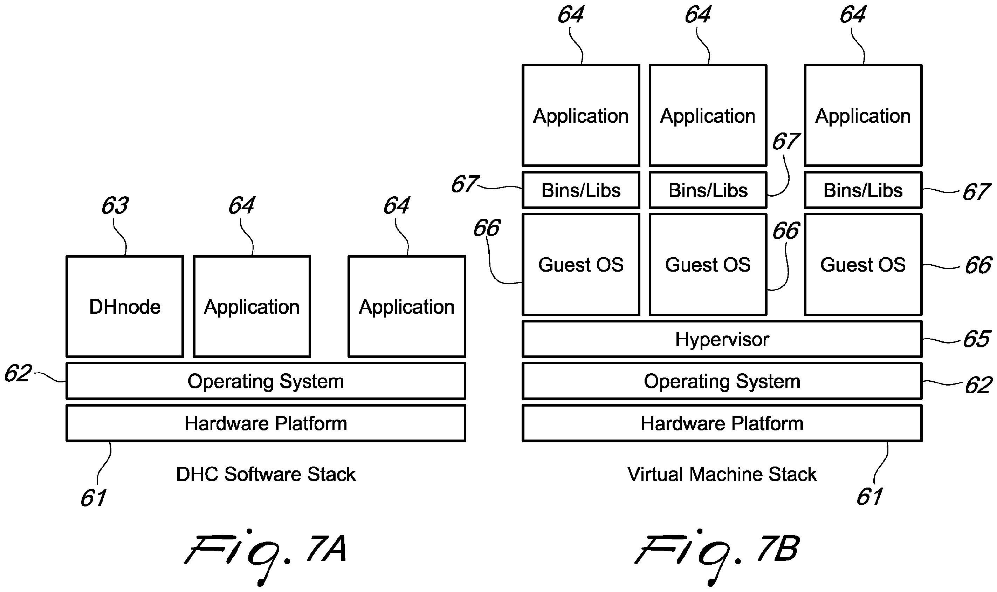

In particular, Figure 7B shows an embodiment of an element of the known hybrid cloud system, based on virtual machines, which comprises a hardware platform 61, an operating system 62, a hypervisor 65, a plurality of guest operating systems 66 and a plurality of respective software applications 64. However, in another embodiment (not shown) of an element of the known hybrid cloud system, based on virtual machines, the hypervisor 65 can be executed directly on the hardware platform 61, effectively substituting the operating system 62. In a further embodiment (not shown) of an element of the known hybrid cloud system, the system can be container-based; in this case, the hypervisor 65 is substituted by a container engine and there are no guest operating systems 66. These known techniques require both the use of hardware platforms 61 offering adequate levels of performance and the involvement of technical experts in the sector of development, installation and maintenance of the system.

Note that the elements shown in Figures 1, 2 and 3, relating to the prior art, and designated with the reference numerals paired with the letter A, have functions and execute operations that are substantially similar, if not identical, to those of the elements designated with the same reference numerals alone (i.e. not paired with the letter A) in the decentralized hybrid cloud system 30 according to the present invention. For example, the public server device 16A of known cloud systems 10, 14 has functions and executes operations that are substantially similar, if not identical, to those of the public server device 16 of the decentralized hybrid cloud system 30 according to the present invention.

In general, the system according to the invention is a hybrid cloud system wherein the devices or nodes 16 comprised in the service provider space 22, and therefore managed by the service provider, cooperate with the devices or nodes 20, 36 comprised in the user space 32, and therefore managed by individual human users.

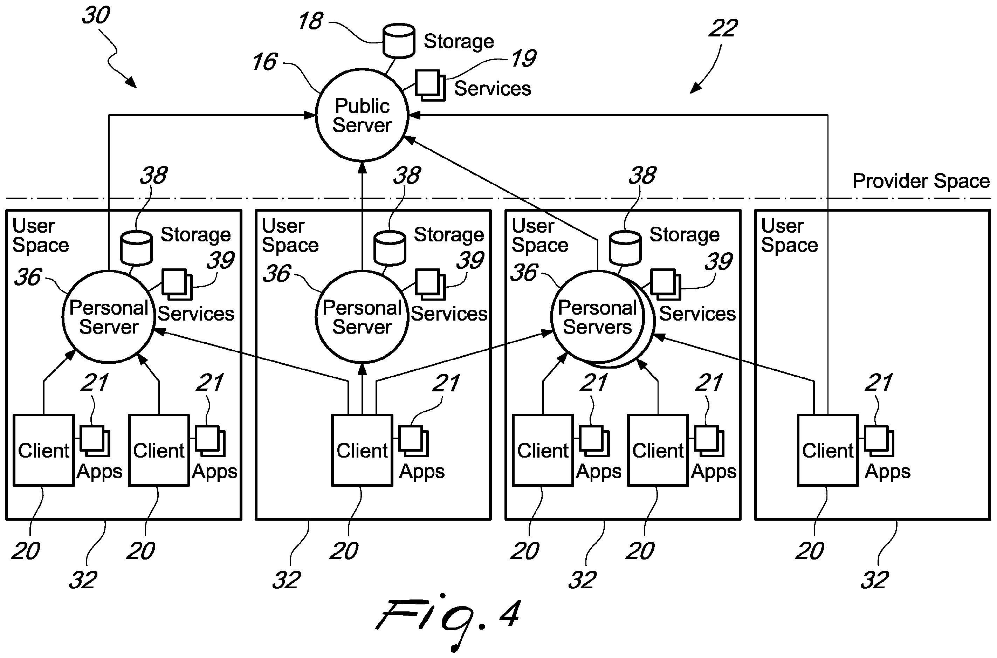

With reference to Figure 4, the decentralized hybrid cloud system according to the present invention, generally designated by the reference numeral 30, comprises substantially at least one service provider space or area 22, owned and controlled by a service provider, and therefore by a third party, and a plurality of user spaces or areas 32, each one owned and controlled directly and exclusively by a respective human user, in particular private or professional.

Clearly, the service provider owns and controls all the devices, which will be described below, and more generally all the elements, comprised in the service provider space 22. Similarly, the human user owns and controls all the devices, which will be described below, and more generally all the elements, comprised in the respective user space 32.

Basically, in the decentralized hybrid cloud system 30 according to the invention there is a plurality of user spaces 32, one space 32 for each human user who uses that system 30 according to the invention. Each one of these user spaces 32 contains all the devices, which will be described below, and more generally all the elements, of the respective human user. Each one of these user spaces 32 is under the direct and exclusive control of the respective human user to whom it refers.

The service provider space 22 comprises at least one public server device 16, which manages and provides the respective data 18 and services 19. The services 19 managed and provided by the public server 16 can comprise artificial intelligence functions; in other words, these services 19 or a part of them can be provided by means of artificial intelligence.

In particular, the public server 16 comprises, or is operatively connected to, a data storage 18 which is configured to store the data of that public server 16. Furthermore, the public server 16 comprises an electronic control unit (not shown).

The electronic control unit is the main functional element of the public server device 16, and for this reason it is connected to and in communication with the other elements of the public server 16. The electronic control unit of the public server 16 is provided with suitable capacity for processing and interfacing with the other elements of the public server 16, and it is configured to command, control and coordinate the operation of the elements of the public server 16 to which it is connected and with which it is in communication. For example, the electronic control unit of the public server 16 executes the services 19 of that public server 16.

Each user space 32 comprises at least one respective client device 20, which manages and executes the respective applications 21. This client 20 is operated directly and exclusively by the human user to whom the corresponding user space 32 refers. The client 20 is the device by way of which a user benefits from the data 18, 38 and the services 19, 39 offered and provided by the public server 16 and/or by the personal server 36. The client 20 can be a personal computer, a smartphone, a tablet computer, a smartwatch, an IoT device.

In particular, the client 20 comprises an electronic control unit (not shown). The electronic control unit is the main functional element of the client device 20, and for this reason it is connected to and in communication with the other elements of the client 20. The electronic control unit of the client 20 is provided with suitable capacity for processing and for interfacing with the other elements of the client 20, and it is configured to command, control and coordinate the operation of the elements of the client 20 to which it is connected and with which it is in communication. For example, the electronic control unit of the client 20 executes the applications 21 of that client 20.

The client 20, and therefore the respective applications 21, of the user space 32 can be connected and functionally linked to, and therefore may access, the public server 16, and therefore the respective data 18 and services 19, of the service provider space 22.

At least one user space 32 further comprises at least one personal server device 36, which manages and provides the respective data 38 and services 39. The services 39 managed and provided by the personal server 36 can comprise artificial intelligence functions; in other words, these services 39 or a part of them can be provided by means of artificial intelligence. Optionally, each user space 32 further comprises at least one respective personal server device 36.

This personal server 36 is under the direct and exclusive control of the human user to whom the corresponding user space 32 refers. The uniqueness of the human user who controls the personal server 36 is essential, because this human user/owner is responsible for the protection of the data 38 stored on the personal server 36, and must therefore keep the access credentials to it confidential.

The personal server 36 can be executed on a processing device made available in PaaS (an acronym for Platform as a Service) mode by the service provider, or on a device owned by the human user. The platform on which the personal server 36 is executed can also be shared with other applications run by the user.

In particular, the personal server 36 comprises, or is operatively connected to, a data storage 38 which is configured to store the data of that personal server 36. Furthermore, the personal server 36 comprises an electronic control unit (not shown).

The electronic control unit is the main functional element of the personal server device 36, and for this reason it is connected to and in communication with the other elements of the personal server 36. The electronic control unit of the personal server 36 is provided with suitable capacity for processing and interfacing with the other elements of the personal server 36, and it is configured to command, control and coordinate the operation of the elements of the personal server 36 to which it is connected and with which it is in communication. For example, the electronic control unit of the personal server 36 executes the services 39 of that personal server 36.

The personal server 36, and therefore the respective data 38 and services 39, of the user space 32 is connected and functionally linked to, and therefore may access, the public server 16, and therefore the respective data 18 and services 19, of the service provider space 22. The personal server 36, and therefore the respective data 38 and services 39, of the user space 32 can be connected and functionally linked to, and therefore may access, another personal server 36, and therefore the respective data 28 and services 29, of the same user space 32 or of another user space 32.

If there is a personal server 36 in a user space 32, the client 20, and therefore the respective applications 21, of the user space 32 can be connected and functionally linked to, and therefore may access, the personal server 36, and therefore the respective data 38 and services 39, of the same user space 32 or of another user space 32.

With regard to this latter aspect, the human user who owns and operates/controls the user space 32 can configure the personal server 36 comprised in that user space 32 to share the corresponding data 38 and/or services 39 with one or more clients 20 of other user spaces 32, and therefore of other human users of the system 30, for example family members, friends, colleagues or clients.

Basically, in the decentralized hybrid cloud system 30 according to the invention there are, in the user spaces 32, personal server devices 36 which provide network and/or sharing services, and client devices 20 which use these network and/or sharing services.

Basically, if there is no personal server 36 in a user space 32, the client 20, and therefore the user, can use the data 18 and the services 19 made available by the public server 16 of the service provider space 22, and the data 38 and the services 39 made available by one or more personal servers 36 of other user spaces 32, and which therefore have been shared by other human users of the system 30. Alternatively, if there is a personal server 36 in a user space 32, the client 20, and therefore the user, can also use the data 38 and the services 39 made available by that personal server 36 of its user space 32 or of another user space 32, in addition to the data 18 and services 19 made available by the public server 16 of the service provider space 22.

Note that a personal server 36 of a user space 32 can share its data 38 and services 39 with clients 20 and/or personal servers 36 of other user spaces 32, but the human user who owns and operates/controls that personal server 36 is always unique.

Basically, a user space 32 of the system 30 according to the invention can comprise at least one client 20 and at least one personal server 36, or only at least one client 20.

Therefore, in an embodiment, as shown in Figure 4, the plurality of user spaces 32 can comprise at least one first user space 32 which comprises at least one client 20 and at least one personal server 36, and at least one second user space 32 which comprises only at least one client 20.

In an embodiment, if the system 30 according to the invention is used by an organization, for example a company, the system 30 can comprise a plurality of personal servers 36, but they must be comprised in a single user space 32, so that they can be owned by, and controlled by, a single human user, for example the IT administrator of the organization, while the other user spaces 32 can be used by other organizations, for example companies, or private or professional users, and comprise at least one client 20 and optionally at least one personal server 36. The human user who owns and operates/controls the user space 32 that comprises the personal servers 36 configures these personal servers 36 to share the services 39 with the other clients 20, and therefore with the other users in the organization.

As mentioned, the personal devices, i.e. the client 20 and the personal server 36, of the human user to whom the respective user space 32 refers are connected and functionally linked to the public cloud server 16. The public cloud server 16 provides the main services required for communication between the various devices 16, 20, 36 of the system 30, in addition to providing services itself to the user.

As mentioned, each personal device, i.e. each client 20 or each personal server 36, is comprised in a respective user space 32 and is dedicated to a human user to whom the respective user space 32 refers. Basically, the human user is to all intents and purposes the owner and operator/controller of each personal device 20, 36.

In an embodiment, the personal devices, i.e. the client 20 and the personal server 36, of the user space 32 can be implemented and/or executed on a hardware platform owned by the human user, located in an area under the physical control of that human user. In another embodiment, the personal devices, i.e. the client 20 and the personal server 36, of the user space 32 can be implemented and/or executed on a virtual platform made available by the service provider, for example in PaaS (Platform as a Service) mode, in a user virtual space (not shown) of the system 30. In this user virtual space, the personal devices 20, 36 are owned by the service provider but managed and controlled by the human user.

In general, all the basic services, for example network and/or sharing services, of the system 30 according to the invention are available both on the public servers 16 and on the personal servers 36, and the human user can decide and configure which device 16, 36 to use based on the security profile assigned to the data item handled by the service 19, 39.

In general, a data item 45, 48, 55, 58 is any artifact generated by a human user, or rather by a device thereof, for example the client 20 and/or the personal server 36. A data item 45, 48, 55, 58 can have any type/format. For example, documents created by the user in any format are considered data items 45, 48, 55, 58, but the audio and/or video streams generated by the calls made by the user using his or her smartphone and/or personal computer are also considered data items 45, 48, 55, 58, as are the data streams generated by the user's IoT devices, where the user's smartphone, personal computer and IoT devices are clients 20.

Advantageously, according to the present invention, all the data 45, 48, 55, 58 are treated in the same way. For example, a PDF document or a Microsoft Excel spreadsheet are handled with the same strategy applied to a text message generated by the user during a chat or to a real-time data item generated by a video conference or sent to an IoT device.

In the system 30 according to the invention, similarly to the user space 32, a data item 45, 48, 55, 58 generated by a human user, or rather by his or her client 20 or personal server 36, is considered the property of that human user, and therefore is owned and controlled directly and exclusively by that human user. As a consequence, the user must always have full control over that data item 45, 48, 55, 58, even after sharing it with other users, or rather with personal servers 36 and/or clients 20 of other users.

The data item 45, 48, 55, 58 generated by the client 20 of the user space 32 can be located, and therefore stored, on the public server 16 and/or on the personal server 36. In other words, the data item 45, 48, 55, 58 can be part of the data 18 of the public server 16 and/or of the data 38 of the personal server 36.

Advantageously, in the system 30 according to the invention, each data item 45, 48, 55, 58 is managed by way of a data item container 43, 53 which does not contain the actual data item itself but at least one link to it. If the data item 45, 48, 55, 58 is composed of a plurality of elements, the data item container 43, 53 contains the link to each element of it.

In an embodiment, the data item container 43, 53 can be located, and therefore stored, on the same device, for example on the public server 16, on the personal server 36 or in the client 20, where the data item 45, 48, 55, 58 to which the link in the data item container 43, 53 refers is located, and therefore stored (or where the elements of the data item 45, 48, 55, 58 to which the links in the data item container 43, 53 refer are located, and therefore stored). In brief, the data item container 43, 53 and the data item 45, 48, 55, 58 can both be stored on the same server device 16, 36 or client device 20.

In another embodiment, the data item container 43, 53 can be located, and therefore stored, in the system 30 completely independently of the data item 45, 48, 55, 58 to which the link in the data item container 43, 53 refers (or of the elements of the data item 45, 48, 55, 58 to which the links in the data item container 43, 53 refer). In brief, the data item container 43, 53 and the data item 45, 48, 55, 58 can be stored on different server devices 16, 36 or client devices 20.

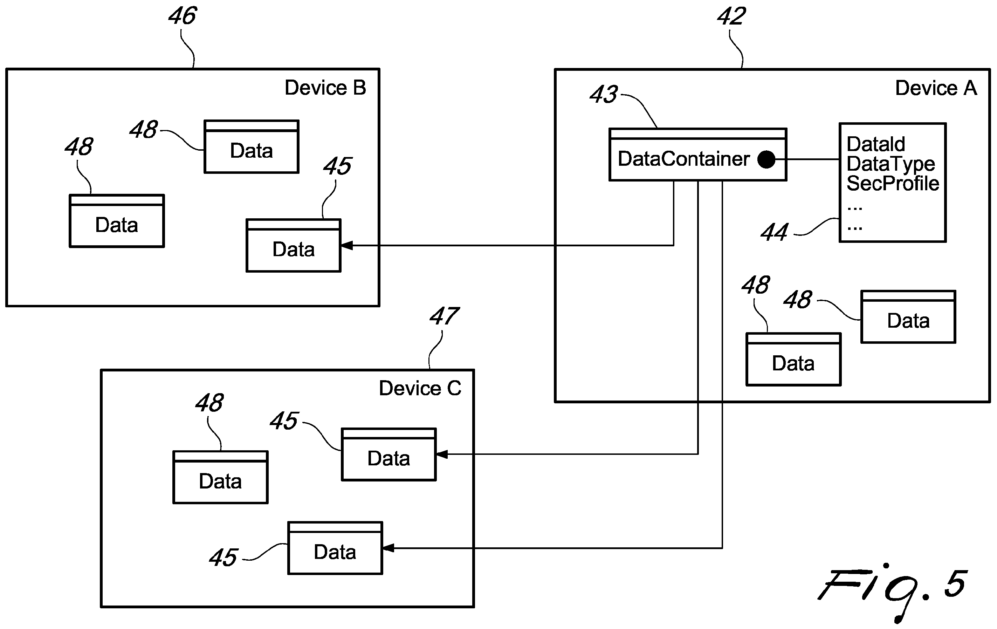

With reference to Figure 5, in an embodiment, the data item container 43 is located, and therefore stored, on a device 42, for example a public server 16 or a personal server 36, while the data item 45 to which the link in the data item container 43, 53 refers is (or the elements or portions of the data item 45 to which the links in the data item container 43 refer are) located, and therefore stored, on at least one other device 46, 47, for example another public server 16 or another personal server 36. In particular, the data item container 43 is located in a first device 42, while the elements or portions of the data item 45 are located in a second device 46 (which comprises an element or a portion of the data item 45) and in a third device 47 (which comprises two elements or portions of the data item 45). The devices 42, 46, 47 can be public servers 16 and/or personal servers 36.

Obviously, again with reference to Figure 5, the devices 42, 46, 47 where the data item container 43 and/or the data item 45 (or the elements or portions of the data item 45) are located, and therefore stored, can also comprise, and therefore also store, other data items 48 (or other elements or portions of data items 48) to which other data item containers (not shown) refer.

Advantageously, in addition to the link to the data item 45, 48, 55, 58 to which it refers, the data item container 43, 53 can contain some information about the data item 45, 48, 55, 58 which makes it possible for the system 30 to manage the data item 45, 48, 55, 58 in a dedicated and transparent manner with respect to the contents of the data item. This further information about the data item 45, 48, 55, 58 can comprise its identifier, its type/format and/or other information characterizing that data item 45, 48, 55, 58 in the system 30 according to the invention. Preferably, this further information about the data item 45, 48, 55, 58 comprises its security profile.

The security profiles of data items 45, 48, 55, 58 can be configured by the user who owns those data items 45, 48, 55, 58. By way of the respective security profiles, each user can supply different indications on how his or her data 45, 48, 55, 58 should be managed, setting the behavior of the system 30 according to the invention for each security profile. Basically, a security profile of a data item 45, 48, 55, 58 defines and configures the behavior of the system 30 with respect to that data item 45, 48, 55, 58.

Obviously, the security profiles of the data items 45, 48, 55, 58 act only on the data generated by the user, or rather by his or her client 20 or personal server 36, not on the data available to the user but generated by other users, or rather by other clients 20 or personal servers 36, i.e. data that other users have shared with the user.

As mentioned, the location of the data item 45, 48, 55, 58 and of the services available for the data item 45, 48, 55, 58 is decided by the system 30 according to the invention based on the security profile assigned to that data item 45, 48, 55, 58.

If the security profile indicates that the data item 45, 48, 55, 58 does not require particular protection, it can be stored on the personal server 36, but also on the public server 16. But if the data item 45, 48, 55, 58 requires a high level of protection, it is necessarily stored on the personal server 36 of the user.

Advantageously, if the data item 45, 48, 55, 58 is very critical, that data item 45, 48, 55, 58 can be concealed/obfuscated, in particular by splitting it into a plurality of portions and storing these portions distributed over a plurality of devices, in particular a plurality of personal servers 36, so that it is never present in its entirety on a single device. Clearly, this concealment/obfuscation of the data item 45, 48, 55, 58 can be used if the user owns and operates/controls a plurality of personal servers 36. If the user owns and operates/controls a single personal server 36, he or she can still request that portions of data items be stored on the public server 16 or on personal servers 36 made available by other users.

With reference to Figure 5, the data item container 43 can be located, and therefore stored, on a device 42, for example a public server 16 or a personal server 36, while the portions of the data item 45 to which the links in the data item container 43 refer are located, and therefore stored, on other devices 46, 47, for example another public server 16 or another personal server 36. In particular, the data item container 43 is located in a first device 42, while the portions of the data item 45 are located in a second device 46 (which comprises a portion of the data item 45) and in a third device 47 (which comprises two portions of the data item 45).

As mentioned, a data item 45, 48, 55, 58 can be composed of multiple elements, where the elements inherit the security profile of the data item 45, 48, 55, 58 to which they belong but can be located, and therefore stored, on different devices. For example, a data item 45, 48, 55, 58 composed of multiple elements can be a message from a chat containing various photos or videos, or a note referring to multiple documents.

The data item container 43, 53 is created as a consequence of the generation of the corresponding data item 45, 48, 55, 58 by the user, or rather by his or her client 20 or personal server 36, but, differently from the data item 45, 48, 55, 58, itself, the data item container 43, 53 can be located, and therefore stored, on any device, for example a public server 16 or a personal server 36, independently of the location of the data item 45, 48, 55, 58 to which the link inside it refers.

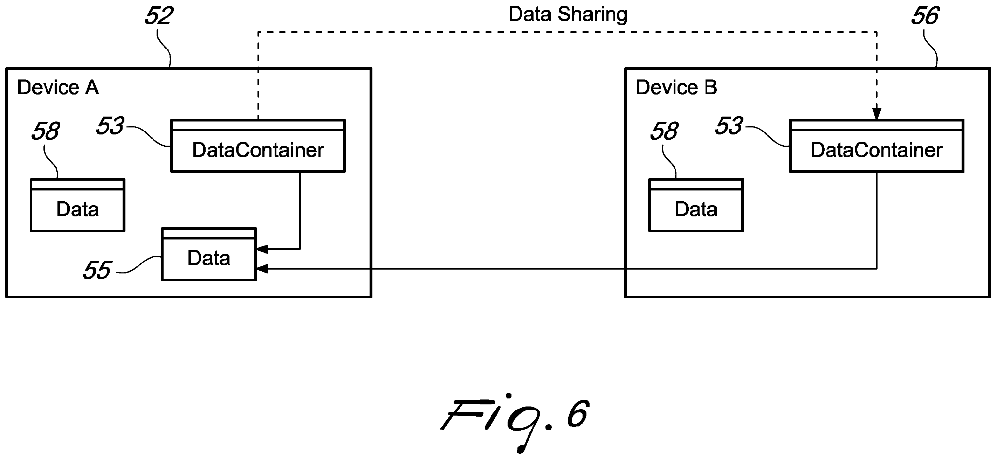

With reference to Figure 6, in an embodiment, in a situation in which a data item 55 is shared, the data item container 53 is always sent to, and therefore copied to, the device 56 of the user on the receiving end of the sharing, for example the client 20 or the personal server 36. However, the data item 55 to which the link of the data item container 53 refers is sent to, and therefore copied to, the device of the user on the receiving end of the sharing, for example the client 20 or the personal server 36, only if the security profile of the data item 55 permits it. In particular, a first device 52 of the user who owns the data item 55 comprises that data item 55 and the corresponding data item container 53, while a second device 56 of the user on the receiving end of the sharing of the data item 55 comprises only that data item container 53, or rather a copy of that data item container 53.

Obviously, again with reference to Figure 6, the devices 52, 56 where the data item container 53 and/or the data item 55 (or the elements or portions of the data item 55) are located, and therefore stored, can also comprise, and therefore also store, other data items 58 (or other elements or portions of data items 58) to which other data item containers (not shown) refer.

Basically, the data item 45, 48, 55, 58 is stored in the file system that is present on the device where it is located (if the data item is not real-time), or is held temporarily in cache on the device (if the data item is real-time).

Advantageously, storing the data item 45, 48, 55, 58 in the file system or in cache is done with protection, i.e. the data item 45, 48, 55, 58 is stored in encrypted form, with encryption keys and algorithms chosen on the basis of the indications supplied by the security profile associated with the data item 45, 48, 55, 58.

Advantageously, as described below, the persistence of the data item 45, 48, 55, 58, i.e. the time for which the data item 45, 48, 55, 58 is stored in the file system or in cache of a specific device (data item volatility), depends on the indications supplied by the security profile associated with the data item 45, 48, 55, 58.

The security profile of the data item 45, 48, 55, 58 can indicate the encryption key and algorithm to use for the protection of the data item 45, 48, 55, 58, both on the devices of the user who owns the data item 45, 48, 55, 58, and on the devices of the users with whom the data item 45, 48, 55, 58 has been shared, if the data item 45, 48, 55, 58 is shared with at least one other user. The security profile can also indicate how the data item 45, 48, 55, 58 is to be managed on the devices of the owner user and on the devices of the users on the receiving end of the sharing. In particular, limits can be imposed on these users on the operations that can be performed on the data item 45, 48, 55, 58, so allowing the user who owns the data item 45, 48, 55, 58 to keep his or her control even after this data item 45, 48, 55, 58 has been shared.

A shared data item 45, 48, 55, 58 is sent and stored on a device, for example a client 20 or a personal server 36, of the user on the receiving end of the sharing only if the security profile of that shared data item 45, 48, 55, 58 permits it. Otherwise, the shared data item 45, 48, 55, 58 is sent to a device of the user on the receiving end of the sharing only when that receiving user requests its availability, and in this case the data item 45, 48, 55, 58, or a portion of it, is kept on that device only for the time necessary for it to be consulted by the receiving user. Since the user who owns the data item 45, 48, 55, 58 has control over it, this user can decide at any time to interrupt the sharing that was begun earlier (data item lock). Therefore, in this case, the user on the receiving end of the sharing may encounter a refusal in response to the request for availability of the data item 45, 48, 55, 58.

Basically, locking the data item interrupts, temporarily or definitively, the sharing of a data item 45, 48, 55, 58 with another user, but while keeping the data item 45, 48, 55, 58 available for the user who owns it and for the other users with whom it has been shared, and who are not locked out. If before the lock the data item 45, 48, 55, 58 has been transferred completely or partially onto a device, for example a client 20 and/or a personal server 36, of the user who is locked out, the activation of the lock by the owner user causes the complete removal of this data item 45, 48, 55, 58 from that device.

The services developed for data sharing can also use the security profile of the data item 45, 48, 55, 58 to provide strategies that limit the copying and/or distribution of the data item 45, 48, 55, 58 by the user on the receiving end of the sharing, so that the user who owns the data item 45, 48, 55, 58 always has full control of this data item 45, 48, 55, 58. Clearly, these strategies are applied only for data 45, 48, 55, 58 considered critical by the owner user.

For critical data, the owner user can also request tracking of the data item 45, 48, 55, 58, i.e. he or she can order a report that indicates how the data item 45, 48, 55, 58 has been used by the user on the receiving end of the sharing.

The security profile of the data item 45, 48, 55, 58 can also specify on which device, for example a public server 16 or a personal server 36, a service must be executed. For example, for an audio call, if the call is sensitive then it can be managed and executed only by the user's personal server 36, whereas if the call is non-sensitive it can be managed and executed by the user's personal server 36 or by the public server 16. If the device that meets the required security standard is temporarily unavailable, the level of security assigned to the service is downgraded and the user is informed of the change in security with a suitable notification, for example, for an audio call, by generating a tone which indicates a non-secure call (a "non-secure warning").

The data 45, 48, 55, 58 can be used by artificial intelligence functions made available by the system 30 according to the invention by way of specific services 19 and 39. The security profile can also specify how a data item 45, 48, 55, 58 must be managed by the artificial intelligence functions made available by the system 30 according to the invention. The artificial intelligence functions perform an essential role in assisting the human user in the management and protection of his or her data. The system 30 according to the invention comprises native artificial intelligence functions which are distinguished from known artificial intelligence functions for their capacity to manage the data item 45, 48, 55, 58 as a function of the security profile that was assigned to that data item 45, 48, 55, 58 by the owner user.

Advantageously, all the data 45, 48, 55, 58 belonging to the human user is collected and stored in the public server 16 and/or in the personal server 36. This data 45, 48, 55, 58, suitably processed by artificial intelligence functions, can be used to provide the user with personalized assistance in all his or her activities, e.g. by automatically writing an email, drafting a presentation, or writing up the minutes of a videoconference meeting.

The security profile associated with the data item 45, 48, 55, 58 enables the artificial intelligence functions to handle that data item 45, 48, 55, 58 in a manner consistent with its criticality.

For example, sensitive data can be managed with artificial intelligence engines executed locally on personal servers 36, so that the data item is never located, and therefore exposed, on public servers 16, while non-sensitive data can also be managed with the support of public servers 16, availing of the potential offered by more powerful artificial intelligence engines available on the market.

For example, if artificial intelligence is used to automatically write up the minutes of a meeting held over a video-conference, the artificial intelligence functions take into consideration the security profile associated with the videoconference by the user who generated it in order to decide what artificial intelligence engine to use.

Therefore, the security profile can also define at least one mode of use of the data item 45, 48, 55, 58 by the artificial intelligence functions made available by the system 30 according to the invention, so allowing the human user who owns that data item 45, 48, 55, 58 to use the artificial intelligence functions for activities based on sensitive data as well.

Note that the system 30 according to the invention can also avail of artificial intelligence functions to assist the human user in the protection of his or her data 45, 48, 55, 58, in particular in the steps of creation and/or sharing of the data item. For example, the artificial intelligence functions can automatically assign the security profile to a new data item 45, 48, 55, 58, or validate the security profile assigned to a new data item 45, 48, 55, 58 and alert the human user if the security profile that was assigned manually is not consistent with the type/format of the data item and/or with the assignment strategies normally applied by the human user.

The security profile of the data 45, 48, 55, 58 can configure the behavior of the system 30 according to the invention for one or more characteristics selected from the group consisting of:
- data item location: indicates where the data item is to be stored, for example on a type of device (public server 16, personal server 36) or on a specific device;
- non-real-time data item encryption: indicates whether the data item is to be encrypted for storage and/or for sending, and, in the affirmative, defines the encryption key and algorithm. Optionally, if requested by the human user, a non-sensitive data item can be unencrypted, but the standard behavior of the system 30 according to the invention is to encrypt all types of data item;
- real-time data item encryption: indicates whether the data item is to be encrypted in real-time, and, in the affirmative, defines the real-time encryption key and algorithm;
- tracking of use of the data item by the users with which the data item has been shared, optionally using artificial intelligence techniques: this function enables the user who owns a data item to see when the data item has been used, determine what action has been performed on it (copied, forwarded, etc.), and identify possible fraudulent behaviors;
- data item volatility: a data item is always stored permanently on the public server 16 or on the personal server 36 of the owner user, but it can be made volatile, i.e. deleted after its use (or non-use) on the personal servers 36 and clients 20 of the users with whom the data item has been shared, and/or on the clients 20 of the owner user, in order to limit the use of memory and increase protection of the data item;
- manual or time-controlled data item lock: the owner user of a data item can decide that the data item that he or she has shared is no longer available to one of the users with whom he or she shared it, or is no longer available after a given time has elapsed after sharing it. In this way, if the data item is subject to a lock, the user on the receiving end of the sharing must ask the owner user for permission to access the data item; furthermore, the owner user of the data item can impose a time limit on the sharing of the data item;
- additional protection mechanisms for data item access, for example PINs, passwords, fingerprints etc., on the source and destination devices of the sharing, for example clients 20 or personal servers 36;
- limitation of operations on the shared data item on the destination devices of the sharing, for example denial of the ability to copy and/or forward the data item;
- data item backup mode: indicates the strategy to use for executing the backup of the data item, for example on a public server 16, only on a personal server 36, password-protected, encryption mode, etc.;
- data item concealment/obfuscation: indicates whether the data item is to be stored in a distributed manner on a plurality of devices, in particular a plurality of personal servers 36;
- how the data item is to be used by artificial intelligence functions, in particular which engines to use and which actions to perform in order to protect the data item; and
- specific parameters of applications 21 and services 19, 39: indicates the parameters that set how the data item is to be used by applications 21 and services 19, 39, for data item management and protection.

In an embodiment, the system 30 according to the invention can comprise at least five types of security profiles for data 45, 48, 55, 58, which can correspond to five respective levels of security.

Note that the system 30 according to the invention does not necessarily require the use of virtual machines or containers to isolate the software applications 64 and manage their deployment. In fact, with reference to Figure 7A, each element of the system 30 according to the invention, i.e. public server devices 16, client devices 20 and personal server devices 36, comprises only: a hardware platform 61, an operating system 62 installed directly on the hardware platform 61, and a plurality of software applications 64 installed directly on the operating system 62.

All the devices of the system 30 according to the invention, i.e. public server devices 16, client devices 20, and personal server devices 36, comprise, i.e. have installed, a software framework that implements all the basic functions of the system 30 according to the invention for controlling the data 45, 48, 55, 58, applications 21 and services 19, 39, for example network and/or sharing services.

The applications 64 that implement the services on the public servers 16 and on the personal servers 36, and the applications present on the clients 20, must necessarily use this framework to access the functions of the system 30 according to the invention.

The framework is provided by the cooperation of DHnode control applications 63 present, i.e. installed, on all the devices of the system 30 according to the invention, i.e. public servers 16, clients 20, and personal servers 36. The DHnode control application 63 is a software application supplied by the service provider which is installed and executed directly on the operating system 62 together with other applications 64.

Note that, as mentioned, the framework does not provide a software layer that virtualizes the operating system, as is done with virtual machines or containers. Therefore, the applications 64 present on the clients 20 and the applications 64 of the services present on the public servers 16 and on the personal servers 36 can be installed and executed directly on the operating system 62 and use all the services that are made available by this operating system 62.

Using the framework rather than virtual machines and/or containers, and the possibility of executing the applications 64 and services 64 directly on the operating system, make it possible to also use devices that have low-performing hardware platforms 61, something that is not possible in known cloud systems owing to the high processing load generated by the software layers required by virtual machines or by containers. Furthermore, personal servers 36 can also be executed on non-dedicated platforms that are also used for other purposes, and this helps to further reduce the cost of use.

In any case, the system 30 according to the invention does not rule out the use of virtual machines and/or containers for those devices that have sufficiently powerful hardware platforms 61, but these implementation strategies are preferably used for the public server 16 and/or for the personal servers 36 used by organizations, for example companies. If virtual machines and/or containers are used, the applications and the DHnode control application 63 that provides the framework are executed and installed on the guest operating system, for virtual machines, or on the container engine, for containers.

An instance of DHnode control application 63 is present, i.e. is installed, on all the devices of the system 30 according to the invention, i.e. public server devices 16, client devices 20, and personal server devices 36. The various instances communicate with each other over a secure network which is cooperatively activated and kept in operation.

In the system 30 according to the invention, at least one instance of the DHnode control application 63 is executed on each client device 20. The applications 64 present on the client 20 can access the services offered and provided by the public server 16 and/or by the personal server 36 only through the interface made available by this instance.

In the system 30 according to the invention, at least one instance of the DHnode control application 63 is executed on each public server device 16 and/or personal server device 36. The applications 64 of the services present on the public server 16 and/or on the personal server 36 can offer and provide their services to the client 20 of the user only through the interface made available by this instance.

The DHnode control applications 63 of the various devices 16, 20, 36 cooperate and provide all the main functions of the system 30 according to the invention, so ensuring that all the rules relating to security of data 18, 38 and services 19, 39, and therefore relating to security in the management of such data and services, are complied with.

The DHnode control application 63 can offer and provide one or more functions selected from the group consisting of:
- local data storage with different security levels;
- encryption of data and communications;
- setting and changing of security profiles;
- generation, storage and distribution of encryption keys;
- management of the secure communication network between server devices 16, 36 and client devices 20;
- orchestration of functions between different DHnode control applications 63;
- alignment and distribution of data among various server devices 16, 36 and client devices 20;
- management of data flows in real time;
- duplication and recording of data flows in real time;
- management of data on devices on the receiving end of data sharing;
- installation and activation of services;
- automatic data backup;
- monitoring of applications to detect unlawful behavior; and
- whitelisting and/or blacklisting of applications, users, addresses, domain names, etc.

In practice it has been found that the present invention fully achieves the set aim and objects. In particular, it has been seen that the decentralized hybrid cloud system thus conceived makes it possible to overcome the qualitative limitations of the known art, in that it makes it possible to obtain better effects than those that can be obtained with known solutions and/or similar effects at lower cost and with higher performance levels.

An advantage of the decentralized hybrid cloud system according to the present invention consists in that it makes it possible to ensure high standards of ICT security, in particular with regard to the protection of sensitive data and/or of critical services.

Another advantage of the decentralized hybrid cloud system according to the present invention consists in that it makes it possible to offer all the advantages of the known hybrid cloud system, in particular great control of security, scalability, sustainability and adaptability.

Another advantage of the decentralized hybrid cloud system according to the present invention consists in that it makes it possible to contain the costs associated with it, thus making it economically sustainable and economically accessible to private users, professional users, and small and medium enterprises.

Another advantage of the decentralized hybrid cloud system according to the present invention consists in that it makes it possible to protect sensitive data and ensure such data is not exposed to public servers by means of strategies that do not require the intervention of third-party companies that are expert in the sector for the installation and management of the system, so allowing the decentralized hybrid cloud system to be used also by government bodies that handle sensitive data and which therefore must limit the diffusion of such sensitive data as far as possible.

Basically, the decentralized hybrid cloud system according to the present invention can be provided without requiring specialist knowledge of the technologies applied to hybrid cloud systems, and as a consequence without needing to involve third-party companies the intervention of which requires sensitive data to be shared.

Another advantage of the decentralized hybrid cloud system according to the present invention consists in that it makes it possible to offer and provide a digital experience that is customized to each user, including via the use of artificial intelligence functions that are closely correlated to the data item and are exceptionally personalized because they are based on the user's data held on the public server and/or on the personal server, which can assist the user in all his or her daily activities, in particular activities that use sensitive data, and in the protection of his or her data.

The cloud system according to the invention is hybrid because it uses both devices owned and managed by a service provider, such as the public servers, and devices owned and managed by a human user, such as the personal servers. In the technical field of cloud systems, the term "hybrid cloud system" means a system in which public and private cloud systems cooperate in synergy, making it possible to obtain and exploit the advantages of both.

The cloud system according to the invention is decentralized because the control of the system is not concentrated in a single central entity, but is distributed among a plurality of entities. In this case, the entities that contribute to managing and controlling the system are the service provider and the human users of the system themselves.

The cloud system according to the invention is secure because it implements strategies for managing and protecting data and services that are robust and sophisticated, in order to ensure the highest possible security and confidentiality of personal information, and more generally of sensitive data belonging to the users.

The cloud system according to the invention has an architecture that comprises few elements, in particular devices, which are well-defined and with well-specified functions, a data item management strategy that is simple but can be applied to any type of information, and a distributed system management strategy based on a framework that is easy to manage. Furthermore, the cloud system according to the invention can be provided using low-performing, and even non-dedicated, hardware and/or software, and does not require the use of tools or execution environments that are costly and complex to manage.

Although the decentralized hybrid cloud system according to the invention has been conceived in particular to be used by private users, professional users, small and medium enterprises and government bodies, it can in any case be used, more generally, by any category of users, companies, bodies, organizations etc.

The invention, thus conceived, is susceptible of numerous modifications and variations, all of which are within the scope of the appended claims.

Except where indicated otherwise, the various embodiments described above can be combined in order to provide further and/or alternative embodiments. In addition, the present description covers combinations of variations and preferred embodiments that are not explicitly described.

Moreover, all the details may be substituted by other, technically equivalent elements.

In practice the materials employed, provided they are compatible with the specific use, and the contingent dimensions and shapes, may be any according to requirements and to the state of the art.

In conclusion, the scope of protection of the claims shall not be limited by the figures or by the preferred embodiments illustrated in the description by way of examples, but rather the claims shall comprise all the patentable characteristics of novelty that reside in the present invention, including all the characteristics that would be considered as equivalent by the person skilled in the art.

The disclosures in Italian Patent Application No. 102024000018961 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A decentralized hybrid cloud system (30) comprising at least one service provider space (22), owned and controlled by a service provider, and a plurality of user spaces (32), each one owned and controlled directly and exclusively by a respective human user,
wherein said service provider space (22) comprises at least one public server device (16) which is configured to manage and provide respective data (18) and services (19), and is capable of coordinating and placing said user spaces (32) in communication with each other,
wherein each user space (32) comprises at least one respective client device (20) which is configured to manage and run applications (21), and wherein at least one user space (32) further comprises at least one personal server device (36) which is configured to manage and provide respective data (38) and services (39), and is capable of providing said data (38) and services (39) to other user spaces (32) as well,
wherein said client device (20) of said user space (32) is functionally connected to said public server device (16) of said service provider space (22) and/or to said personal server device (36) of said user space (32),
wherein said personal server device (36) of said user space (32) is functionally connected to said public server device (16) of said service provider space (22), and also to said personal server devices (36) and said client devices (20) of said other user spaces (32),
wherein each data item (45, 48, 55, 58) generated by said client device (20) or by said personal server device (36) of said user space (32) is owned and controlled directly and exclusively by said human user,
wherein said data item (45, 48, 55, 58) is stored, managed, and protected in said public server device (16) of said service provider space (22) and/or in said personal server device (36) and/or in said client device (20) of said user space (32), as a function of specific information associated with said data item (45, 48, 55, 58) by said human user who owns and controls it,
wherein said data item (45, 48, 55, 58) generated by said client device (20) or by said personal server device (36) of said user space (32) can be distributed, managed and protected in said personal server devices (36) and/or in said client devices (20) of said other user spaces (32), as a function of said specific information associated with said data item (45, 48, 55, 58) by said human user who owns and controls it,
wherein a selection and setting of at least one service (19, 39) to be used, among those managed and provided by said public server device (16) of said service provider space (22) or by said personal server device (36) of said user space (32), is made as a function of said specific information associated with said data item (45, 48, 55, 58) that uses said service (19, 39) by said human user who owns and controls it, and
wherein said specific information associated with said data item (45, 48, 55, 58) comprises a security profile that configures the behavior of said system (30) with respect to said data item (45, 48, 55, 58), and is used by said service (19, 39) to manage, use, process and protect said data item (45, 48, 55, 58) as a function of its criticality.

2. The system (30) according to claim 1, wherein each user space (32) further comprises said personal server device (36).

3. The system (30) according to claim 1 or 2, wherein said user space (32) further comprises a plurality of respective personal server devices (36) which are functionally connected to each other.

4. The system (30) according to claim 1, 2 or 3, wherein said client device (20) and said personal server device (36) of said user space (32) are implemented and/or executed on a hardware platform owned by said human user, located in an area under the physical control of said human user.

5. The system (30) according to claim 1, 2 or 3, wherein said client device (20) and said personal server device (36) of said user space (32) are implemented and/or executed on a virtual platform made available by said service provider in a virtual user space of said system (30), said devices (20, 36) in said virtual user space being owned by said service provider but managed and controlled by said human user.

6. The system (30) according to any one of the preceding claims, wherein said data item (45, 48, 55, 58) is any artifact generated by said client device (20) and/or said personal server device (36) of said user space (32), and wherein said data item (45, 48, 55, 58) can have any type/format.

7. The system (30) according to any one of the preceding claims, wherein said data item (45, 48, 55, 58) is managed by means of a data item container (43, 53) comprising at least one link to said data item (45, 48, 55, 58).

8. The system (30) according to claim 7, wherein said data item (45, 48, 55, 58) is composed of a plurality of elements or divided into a plurality of portions, and wherein said data item container (43, 53) comprises a link to each element or portion of said data item (45, 48, 55, 58).

9. The system (30) according to claim 7 or 8, wherein said data item container (43, 53) and said data item (45, 48, 55, 58), to which said link in said data item container (43, 53) refers, are both stored on one of said server devices (16, 36) or client devices (20).

10. The system (30) according to claim 7 or 8, wherein said data item container (43, 53) and said data item (45, 48, 55, 58), to which said link in said data item container (43, 53) refers, are stored on different of said server devices (16, 36) or client devices (20).

11. The system (30) according to any one of the preceding claims, wherein said data item container (43, 53) further comprises an identifier, a type/format and/or other information characterizing said data item (45, 48, 55, 58) in said system (30).

12. The system (30) according to any one of the preceding claims, wherein said data item container (43, 53) further comprises a security profile of said data item (45, 48, 55, 58) which configures a behavior of said system (30) with respect to said data item (45, 48, 55, 58).

13. The system (30) according to claim 12, wherein said security profile of said data item (45, 48, 55, 58) configures said behavior of said system (30) for one or more characteristics selected from the group consisting of: data item location; non-real-time data item encryption; real-time data item encryption; data item usage tracking; data item volatility; manual data item lock; time-controlled data item lock; additional protection mechanisms for data item access; data item backup mode; data item concealment/obfuscation; mode of data item usage by artificial intelligence functions; and specific parameters of applications (21) and services (19, 39) for data item management and protection.

14. The system (30) according to any one of the preceding claims, wherein said data (45, 48, 55, 58) stored on said public server device (16) of said service provider space (22) and/or in said personal server device (36) of said user space (32) are used by artificial intelligence functions made available by said system (30) via said services (19, 39) to assist said human user in all his or her activities, as a function of said security profile of said data item (45, 48, 55, 58) that is used by said artificial intelligence functions to process said data item (45, 48, 55, 58) in a manner consistent with its criticality.

15. The system (30) according to claim 14, wherein said security profile defines at least one mode of use of said data item (45, 48, 55, 58) by said artificial intelligence functions made available by said system (30), thus allowing the use of said artificial intelligence functions for activities based on sensitive data as well.

16. The system (30) according to claim 14 or 15, wherein said artificial intelligence functions are used to assist said human user in protecting his or her data (45, 48, 55, 58), in particular in the steps of creation and/or sharing of the data item.

17. The system (30) according to any one of the preceding claims, wherein said public server device (16), said client device (20) and said personal server device (36) comprise respective control applications (63) which provide a software framework and implement the basic functions of said system (30) for controlling data (45, 48, 55, 58), applications (21) and services (19, 39).

18. The system (30) according to claim 17, wherein said control applications (63) of said devices (16, 20, 36) cooperate and provide all the main functions of said system (30), ensuring compliance with all rules relating to security in the management of said data (18, 38) and services (19, 39).

19. The system (30) according to claim 17 or 18, wherein said functions implemented by said control applications (63) comprise one or more functions selected from the group consisting of: local data storage with different security levels; encryption of data and communications; setting and changing of security profiles; generation, storage and distribution of encryption keys; management of the secure communication network between said server devices (16, 36) and said client devices (20); orchestration of functions between different control applications (63); alignment and distribution of data among various server devices (16, 36) and client devices (20); management of data flows in real time including their duplication and recording; data sharing; installation and activation of services; automatic data backup; monitoring of applications to detect unlawful behavior; whitelisting; blacklisting; and said functions according to claim 13.
